# EUROPÄISCHE PATENTSCHRIFT

(11) **EP 2 412 243 B1**
(45) Veröffentlichungstag und Bekanntmachung des Hinweises auf die Patenterteilung: **10.02.2016**
(21) Anmeldenummer: 11171252.7
(22) Anmeldetag: 24.06.2011
(51) Int. Cl.: A21B 3/13

(54) **Springform**
Spring form
Moule à fond amovible

(30) Priorität: 28.07.2010 DE 102010038526; 20.04.2011 DE 102011007809
(43) Veröffentlichungstag der Anmeldung: 01.02.2012
(73) Patentinhaber: Zenker Backformen GmbH & Co. KG, 91217 Hersbruck (DE)
(72) Erfinder: Riedl, Horst, 86529 Schrobenhausen (DE)
(74) Vertreter: Rau, Schneck & Hübner Patentanwälte Rechtsanwälte PartGmbB

(56) Entgegenhaltungen:
- DE-U- 1 618 101
- DE-U1- 20 314 269
- DE-U1-202006 018 199

## Beschreibung

Die Erfindung betrifft eine Springform zum Backen von Backwaren, insbesondere von Kuchen.

Springformen zum Backen von Backwaren und insbesondere zum Backen von Kuchen sind durch offenkundige Vorbenutzung seit längerem bekannt. Derartige Springformen weisen im Wesentlichen einfache, regelmäßige Geometrien auf und sind beispielsweise rund oder rechteckförmig gestaltet. Der Grund hierfür ist, dass die Springform einen an sich bekannten Verschluss aufweist, der beim Öffnen ein Aufweiten des Randes der Springform bewirkt.

Aus der DE 1 618 101 U ist eine Herz-Springform bekannt, wobei ein Verschluss in einem abgerundeten Bereich der Herzkontur und ein Scharnier dem Verschluss gegenüberliegend vorgesehen sind. Aus der DE 203 14 269 U1 ist ebenfalls eine herzförmige Springform bekannt, wobei ein Verschluss an einer von zwei Längsseiten angebracht ist. Die Öffnung der Springform ist durch das biegsame Material des Randes der Springform ermöglicht.

Der Erfindung liegt die Aufgabe zugrunde, eine Springform derart zu verbessern, dass eine Formenvielfalt für die Auswahl der Springform besteht. Ferner soll das Entnehmen der fertigen Backwaren aus der Springform vereinfacht und verbessert werden.

Die Aufgabe wird durch die Merkmale des Anspruchs 1 gelöst. Der Kern der Erfindung besteht darin, dass an einem Rand, der mehrere Randabschnitte umfasst, zwei benachbarte Randabschnitte schwenkbar miteinander verbunden sind, wobei der Rand eine kreissektorförmige Kontur mit einem Mittelpunkt, insbesondere mit einem Mittelpunktswinkel von 90° in einer Schließstellung der Springform aufweist. Auch der Boden ist kreissektorförmig mit einem Mittelpunkt, vorzugsweise mit einem Mittelpunktswinkel von 90° in einer Schließstellung der Springform ausgeführt. Ferner ist ein Scharnier zur schwenkbaren Verbindung des ersten Randabschnitts und der zweiten Randabschnitts vorgesehen, wobei der Boden deart mit dem Rand verbunden ist, dass das Scharnier an dem Mittelpunkt angeordnet ist. Das Scharnier ist erfindungsgemäß durch einen Knickbereich gebildet, wobei der erste Randabschnitt und der zweite Randabschnitt integral miteinander ausgebildet sind und über den integralen Knickbereich miteinander verbunden sind. Der erste Randabschnitt und der zweite Randabschnitt sind über den integralen Knickbereich zueinander verschwenbar.

Der Rand kann im Bereich der verschwenkbaren Anlenkung der beiden Randabschnitte beispielsweise eine reduzierte Höhe und/oder Blechstärke aufweisen. Durch die erfindungsgemäße Ausführung der Springform ist eine erhöhte Flexibilität des Randes und damit das Öffnen und Schließen auch von Springformen mit aufwändigen Konturen ermöglicht. Somit kann eine Springform mit einer neuen, bislang nicht ausführbaren Kontur gestaltet werden. Dies kann insbesondere eine kreissektorförmige Kontur mit einem Mittelpunkt sein, wobei der Mittelpunktswinkel vorteilhafterweise 90° betragen kann. Eine derartige Kontur entspricht einem Viertelkreis, sodass beispielsweise bei Mehrfachanwendung einer derartigen Springform ein kreisrunder Gesamtkuchen aus vier einzelnen Viertelkuchen erzeugt werden kann, wobei die vier Viertelkuchen unterschiedlich gestaltet sein können. Es ist auch möglich, weitere Konturen mit der erfindungsgemäßen Springform zu gestalten wie beispielsweise kreissektorförmige Konturen mit einem von 90° abweichenden Mittelpunktswinkel oder auch mit einer dreieckförmigen Kontur. Mit der erfindungsgemäßen Springform ist die Vielfalt bezüglich der Formgebung der Springform erhöht.

Weitere vorteilhafte Ausgestaltungen der Erfindung ergeben sich aus den Unteransprüchen.

Zusätzliche Merkmale und Einzelheiten der Erfindung ergeben sich aus der nachfolgenden Beschreibung zweier Ausführungsbeispiele anhand der Zeichnung. Es zeigen:
- Fig. 1: eine perspektivische Darstellung einer nicht erfindungsgemäßen Springform,
- Fig. 2: eine teilweise geschnitten dargestellte Seitenansicht der Springform gemäß Fig. 1,
- Fig. 3: eine perspektivische Darstellung einer erfindungsgemäßen Springform gemäß eines zweiten Ausführungsbeispiels, und
- Fig. 4: eine Schnittansicht durch einen Randbereich der in Fig. 3 dargestellten Springform.

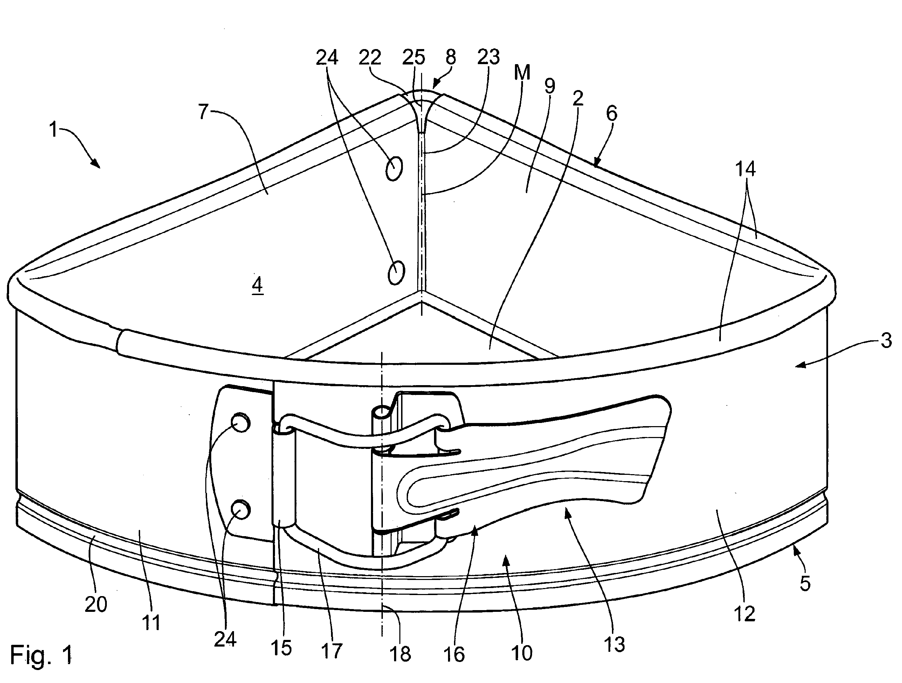

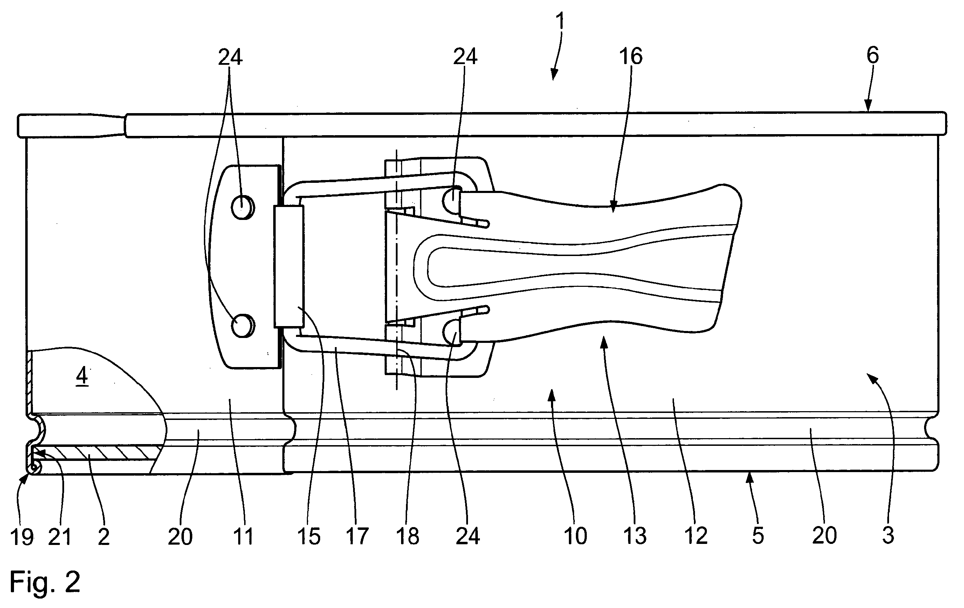

Eine in den Fig. 1 und 2 dargestellte Springform 1 gemäß einem ersten, nicht erfindungsgemäßen Ausführungsbeispiels weist einen Boden 2 und einen mit dem Boden 2 verbindbaren Rand 3 auf. Die Springform 1 umgibt einen Innenraum 4, in den eine Rollmasse wie beispielsweise Teig zum Backen insbesondere eines Kuchens eingefüllt werden kann. Der Boden 2 ist an einer Unterseite 5 des Rands 3 angeordnet. Entsprechend ist die Springform 1 an einer der Unterseite 5 gegenüberliegenden Oberseite 6 des Rands 3 beispielsweise zum Befüllen mit Teig offen.

Der Boden 2 ist aus einer Stahlplatte hergestellt und beidseitig, d.h. an einer dem Innenraum 4 zugewandten Oberseite und an einer dem Innenraum 4 abgewandten Unterseite, mit einer Antihaftbeschichtung wie beispielsweise Teflon oder Emaille, insbesondere flexiblem Emaille, beschichtet.

Der Rand 3 ist mehrteilig ausgeführt und umfasst einen ersten Randabschnitt 7 und einen mit dem ersten Randabschnitt 7 mittels eines Scharniers 8 schwenkbar verbundenen zweiten Randabschnitt 9. Ferner ist ein zweiteiliger dritter Randabschnitt 10 vorgesehen mit einem äußeren Teil 11 und einem inneren Teil 12. An dem dritten Randabschnitt 10 ist ein für Springformen an sich bekannter Verschluss 13 zum Öffnen und Schließen der Springform 1 vorgesehen. Durch Betätigen des Verschlusses 13 werden der äußere Teil 11 und der innere Teil 12 zueinander entlang einer Kontur des Rands 3 verschoben. Der äußere Teil 11 ist einstückig mit dem ersten Randabschnitt 7 verbunden. Der innere Teil 12 ist einstückig mit dem zweiten Randabschnitt 9 verbunden.

Es ist auch möglich, den Rand 3 einstückig auszubilden, sodass der erste Randabschnitt 7 und der zweite Randabschnitt 9 integral miteinander aus gebildet sind. Deren Verschwenkbarkeit zueinander kann beispielsweise durch eine Reduzierung der Blechdicke des Rands 3 und/oder der Höhe des Rands 3 in dem relevanten Bereich erreicht werden.

Der Rand 3 weist eine kreissektorförmige Kontur mit einem Mittelpunkt M auf, wobei der Mittelpunktswinkel gemäß dem gezeigten Ausführungsbeispiel 90° beträgt. Es ist auch möglich, andere Mittelpunktswinkel für eine Springform zu wählen. Entsprechend der Kontur des Viertelkreises sind der erste Randabschnitt 7 und der zweite Randabschnitt 9 als ebene Flächenteile ausgeführt. Dagegen ist der dritte Randabschnitt 10 konvex geformt.

Der Rand 3 weist an der Oberseite 6 eine umlaufende Wulst 14 auf, wobei die Wulst 14 einen im Wesentlichen ringförmigen Querschnitt in einer zur Kontur der Springform 1 senkrechten Schnittebene aufweist. In einem Verbindungsbereich des äußeren Teils 11 mit dem inneren Teil 12 ist die Wulst 14 des äußeren Teils 11 derart kleiner dimensioniert, dass sie in die Wulst des inneren Teils 12 einschiebbar ist.

Der Rand 3 ist aus einem Blechstreifen beispielsweise aus Stahl oder Edelstahl hergestellt, wobei auch andere Werkstoffe zur Herstellung des Rands 3 für die Springform 1 geeignet sind. An der Unterseite 5 ist der Rand 3 in Form einer Bördelkante 19 eingerollt. Eine von der Bördelkante 19 gebildete Kontur dient als Auflage für die Springform 1 auf einer Unterlage. Benachbart zu der Bördelkante 19 ist an dem Rand 3 eine umlaufende Sicke 20 derart gestaltet, dass sie in den Innenraum 4 der Springform 1 hineinragt. Die Bördelkante 19 ist derart ausgeführt, dass sie in Richtung des Innenraums 4 der Springform 1 gerichtet ist. Zwischen der Bördelkante 19 und der Sicke 20 ist eine Nut 21 gebildet, in die der Boden 2 einlegbar ist. Eine Breite der Nut 21 entspricht dabei einer Dicke des Bodens 2, sodass der Boden 2 sicher an dem Rand 3 unter Bildung der Springform 1 gehalten ist, wenn der Verschluss 13 geschlossen ist. In den Fig. 1 und 2 ist der Verschluss 13 in einer geschlossenen Stellung dargestellt.

Die Bördelkante 19 ist in dem Verbindungsbereich des inneren Teils 12 derart reduziert, dass es in die Bördelkante 19 des äußeren Teils 11 einschiebbar ist. Dadurch, dass das äußere Teil 11 mit der Wulst 14 in der Wulst 14 des inneren Teils 12 und gleichzeitig das innere Teil 12 mit der Bördelkante 19 in der Bördelkante 19 des äußeren Teils 11 berührt sind, sind die Teile 11, 12 sicher und kontrolliert zueinander entlang der Kontur des Rands 3 verschiebbar zueinander angeordnet.

Der Verschluss 13 umfasst eine an dem äußeren Teil 11 angebrachte Befestigungs-Hülse 15 und einen an dem inneren Teil 12 befestigen Betätigungs-Hebel 16, der über einen Bügel 17 schwenkbar mit der Befestigungs-Hülse 15 verbunden ist. Der Betätigungs-Hebel 16 ist weiterhin schwenkbar um eine senkrecht zu dem Boden 2 angeordnete Schwenkachse 18 an dem inneren Teil 12 angeordnet. Durch ein Verschwenken des Betätigungs-Hebels 16 um die Schwenkachse 18 wird die BefestigungsHülse 15 durch den Bügel 17 gegenüber dem Betätigungs-Hebel 16 entlang der Kontur des Rands 3 verschoben. Der Verschluss 13 ist mit mehreren Nieten 24 an dem äußeren Teil 11 und an dem inneren Teil 12 befestigt.

Das Scharnier 8 umfasst einen Biegedraht 22, der jeweils in der Wulst 14 des ersten Randabschnitts 7 und des zweiten Randabschnitts 9 eingeführt ist, sodass der erste und der zweite Randabschnitt 7, 9 durch den Biegedraht 22 miteinander verbunden sind. Der Biegedraht 22 ergänzt die Kontur der im Bereich des ersten und zweiten Randabschnitts 7, 9 unterbrochenen Wulst 14 des Rands 3 zu der viertelkreisförmigen Kontur, wobei der Biegedraht 22 entsprechend dem Mittelpunktswinkel von 90° geformt ist. Das Scharnier 8 umfasst weiterhin einen Verbindungsstreifen 23, der aus Edelstahl hergestellt ist. Der Verbindungsstreifen 23 weist eine hohe Festigkeit und gleichzeitig gute elastische Eigenschaften auf. Der Verbindungsstreifen 23 ist einstückig an den zweiten Randabschnitt 9 angeformt und fest mit dem ersten Randabschnitt 7 durch zwei Nieten 24 verbunden. Der Verbindungsstreifen 23 kann auch als separates Bauteil ausgeführt sein. Die Blechdicke des Verbindungsstreifens 23 kann dann beispielsweise gegenüber der Blechdicke des Rands 3 reduziert sein.

Zusätzlich zu dem Biegedraht 22 ist ein weiterer, nicht dargestellter Biegedraht bei dem Scharnier 8 vorgesehen, wobei der zweite Biegedraht in der Bördelkante 19 des ersten und des zweiten Randabschnitts 7, 9 geführt ist und die beiden Randabschnitte 7, 9 miteinander verbindet. Durch die Kombination der beiden Biegedrähte 22 und des Verbindungsstreifens 23 ist ein Scharnier 8 geschaffen, das eine feste und gleichzeitig flexible Verbindung der beiden Randabschnitte 7, 9 gewährleistet. Insbesondere die Flexibilität des Scharniers 8 erleichtert ein Öffnen der Springform 1 durch den Verschluss 13.

Das Scharnier 8 ist an dem Mittelpunkt M der kreissektorförmigen Kontur angeordnet. Das Scharnier 8 kann auch in einer anderen Form ausgeführt sein, wobei die Verschwenkbarkeit der beiden Randabschnitte 7, 9 zueinander um eine insbesondere senkrecht zum Boden 2 orientierte Scharnierachse 25 gewährleistet ist.

Im Folgenden wird die Funktionsweise der Springform 1 mit dem Scharnier 8 erläutert. Ausgehend von der Anordnung der Springform 1 in den Fig. 1 und 2, bei der der Verschluss 13 sich in der Schließstellung befindet, wird der Betätigungs-Hebel 16 betätigt, in dem ervon seiner an dem Rand 3 anliegenden Position von dem Rand 3 weggezogen wird. Dabei wird der Betätigungs-Hebel 16 in an sich bekannter Weise um die Schwenkachse 18 geschwenkt und damit der mit dem Betätigungs-Hebel 16 verbundene Bügel 17 von dem inneren Teil 12 des dritten Randabschnitts 10 hin zu dem äußeren Teil 11 verlagert. Der Bügel 17 ist schwenkbar in der fest am äußeren Teil 11 befestigten Befestigungs-Hülse 15 angeordnet, sodass durch die Verlagerung des Bügels 17 durch das Öffnen des Verschlusses 13 das äußere Teil 11 und das innere Teil 12 entlang der Kontur des Rands 3 auseinander geschoben werden. Die Öffnungsbewegung der Teile 11, 12 zueinander erfolgt geführt entlang der Bördelkante 19, der Wulst 14 und des Rands 3, wobei das äußere Teil 11 an dem inneren Teil 12 zwischen der Wulst 14 und der Bördelkante 19 flächig anliegt. Dadurch, dass die Teile 11, 12 jeweils einstückig mit den Randabschnitten 7, 9 verbunden sind, werden die Biegedrähte 22 und Verbindungsstreifen 23 des Scharniers 8 elastisch aufgebogen und somit der Rand 3 mit dem Mittelpunktswinkel, der in der Schließstellung 90° beträgt, geringfügig vergrößert und damit die Kontur des Rands 3 aufgeweitet. Dadurch wird entsprechend die Nut 21, in der der Boden 2 in der Schließstellung der Springform 1 gehalten ist, ebenfalls aufgeweitet, sodass in einer Offenstellung der Springform 1 der Boden 2 aus der Nut 21 entnommen werden kann. Der Mittelpunktswinkel des Bodens 2 beträgt 90° und wird durch die Betätigung des Verschlusses 13 nicht verändert. Dadurch, dass der am Scharnier 8 angeordnete Mittelpunktswinkel des Rands 3 durch das Öffnen des Verschlusses 13 um beispielsweise wenige Grad vergrößert wird, ist die von dem Rand 3 gebildete kreissektorförmige Kontur in der Offenstellung gegenüber dem Kreissektor des Bodens 2 vergrößert. Die durch den Verschluss 13 ermöglichte Vergrößerung der Kontur des Rands 3 ist derart gewählt, dass der Boden aus der Nut 21 entweder über die Sicke 20 oder über die Bördelkante 19 hinweg aus der Springform 1 entnehmbar ist. Entsprechend kann in der Offenstellung der Springform 1 der Boden 2 in die Nut 21 eingelegt werden und durch Schließen des Verschlusses 13 sicher klemmend in der Nut 21 gehalten sein.

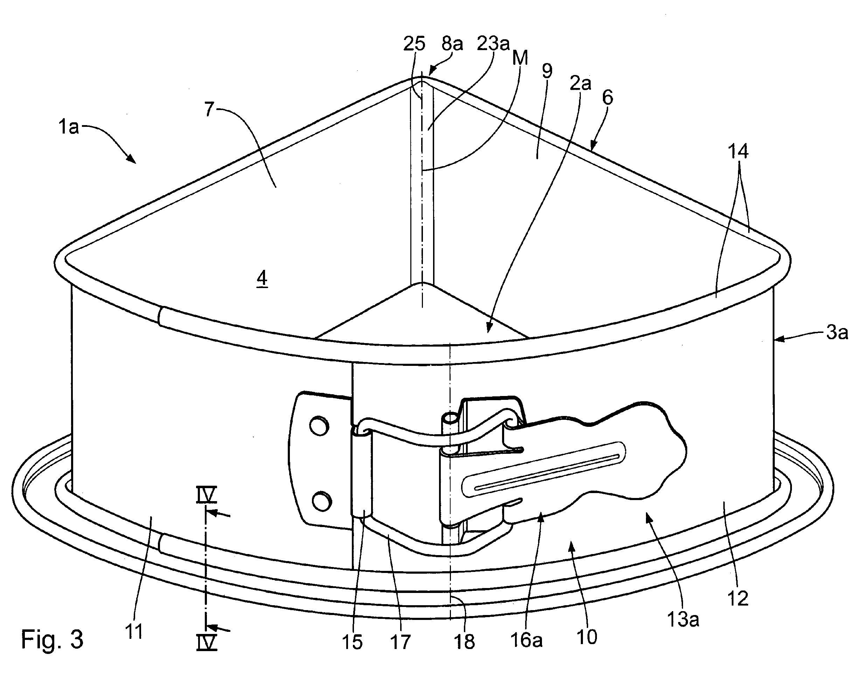

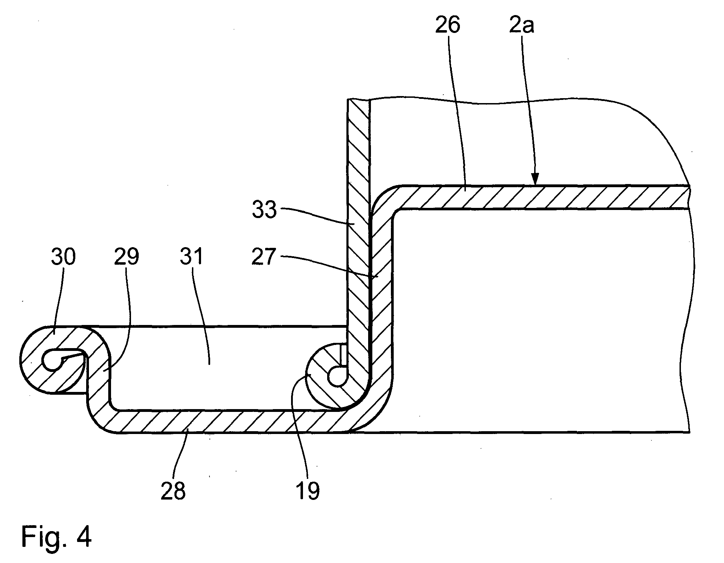

Nachfolgend wird unter Bezugnahme auf die Fig. 3 und 4 ein bevorzugtes, erfindungsgemäßes Ausführungsbeispiel beschrieben. Identische Bauteile erhalten hier dieselben Bezugszeichen wie bei dem ersten Ausführungsbeispiel, auf das hiermit verwiesen wird. Konstruktiv unterschiedliche, jedoch funktionell gleiche Bauteile erhalten identische Bezugszeichen mit einem nachgeordnete "a".

Die erfindungsgemäße Springform 1 a umfasst wieder einen Boden 2a und einen Rand 3a, deren Kontur im Wesentlichen dreieckförmig bzw. kreissektorförmig, vorzugsweise viertelkreissektorförmig, ist.

Der Boden 2a hat eine Bodenplatte 26, deren Grundform der Kontur des Rands 3a entspricht. Er ist viertelkreissektorförmig. Ferner hat der Boden 2a eine sich außen an die Bodenplatte 26 anschließende Seitenwand 27, die umlaufend ausgebildet ist und von der Bodenplatte 26 aus nach unten verläuft. Zwischen der Seitenwand 27 und der Bodenplatte 26 liegt ein Winkel vor, der 90° oder in etwa 90° beträgt. An die Seitenwand 27 schließt sich unten ein nach außen springender Rinnenboden 28 an, der mit der Seitenwand 27 einen Winkel von 90° oder in etwa 90° einschließt und in Umfangsrichtung geschlossen ausgebildet ist. Der Rinnenboden 28 verläuft parallel zu der Bodenplatte 26. Von dem Rinnenboden 28 springt außen ein Begrenzungssteg 29 nach oben vor, der umlaufend ausgebildet ist und senkrecht oder im Wesentlichen senkrecht zu dem Rinnenboden 28 verläuft. Die Seitenwand 27 und der Begrenzungssteg 29 verlaufen im Wesentlichen parallel zueinander. Sie liegen einander gegenüber. Der Begrenzungssteg 29 hat von dem Rinnenboden 28 aus eine geringere Höhe als die Seitenwand 27. An dem Begrenzungssteg 29 ist oben eine Bördelkante 30 ausgebildet. Die Bodenplatte 26, die Seitenwand 27, der Rinnenboden 28, der Begrenzungssteg 29 und die Bördelkante 30 bilden zusammen den Boden 2a. Der Boden 2a ist über den Rinnenboden 28 gegenüber einem Untergrund abstützbar.

Ferner hat der Boden 2a eine umlaufende Aufnahmerinne 31, die durch den Rinnenboden 28 nach unten begrenzt ist. Nach innen ist die Aufnahmerinne 31 durch die Seitenwand 27 begrenzt. Der Begrenzungssteg 29 begrenzt die Aufnahmerinne 31 nach außen. Die Aufnahmerinne 31 ist wannenartig ausgeführt und nach oben offen. Sie ist im Querschnitt U-förmig. Die Aufnahmerinne 31 kann aber auch eine andere Querschnittsform haben.

Der Rand 3a gemäß dem in den Fig. 3 und 4 gezeigten Ausfuhrungsbeispiel unterscheidet sich von dem Rand 3 des Ausführungsbeispiels gemäß den Fig. 1 und 2 dadurch, dass dieser keine Sicke 20 und somit auch keine Nut 21 aufweist. Der Rand 3a erstreckt sich von der oberen Wulst 14 in Richtung auf die Bördelkante 19 im Wesentlichen gerade. Ferner ist die Bördelkante 19 bei dem zweiten Ausführungsbeispiel nach außen gebördelt bzw. gerollt. In der Wulst 14 und in der Bördelkante 19 sind hier im Gegensatz zu dem ersten Ausführungsbeispiel keine Biegedrähte 22 angeordnet.

Der Rand 3a ist ferner einstückig. Der erste Randabschnitt 7 und der zweite Randabschnitt 9 schließen einen Mittelpunktswinkel ein, der vorzugsweise 90° beträgt. Zwischen dem ersten Randabschnitt 7 und dem zweiten Randabschnitt 9 liegt ein Knick- bzw. Biegebereich 23a vor, der bei dem Mittelpunkt M der kreissektorförmigen Kontur vorgesehen ist und eine relative Schwenkbewegung zwischen dem ersten Randabschnitt 7 und dem zweiten Randabschnitt 9 bei Betätigung des Verschlusses 13a erlaubt. Der Knickbereich 23a bildet quasi ein Scharnier 8a in Art eines Filmscharniers mit einer Scharnierachse 25. Er ist mit dem ersten Randabschnitt 7 und dem zweiten Randabschnitt 9 einstückig ausgebildet; er stellt also einen integralen Bereich des Rands 3a dar. Der Knickbereich 23a ist also direkt in dem Rand 3a ausgebildet. Er ist somit aus dem gleichen Material wie der erste Randabschnitt 7 und der zweite Randabschnitt 9 hergestellt. Der Knickbereich 23a bildet einen Verbindungswinkel, der dem Rand 3a eine Ecke verschafft. Er ist durch Biegen des ersten Randabschnitts 7 und des zweiten Randabschnitts 9 zueinander hergestellt. Der Knickbereich 23a hat vorzugsweise Federeigenschaften und gibt die Scharnierachse 25 für den ersten Randabschnitt 7 bzw. den zweiten Randabschnitt 9 vor. Er erstreckt sich zwischen der Wulst 14 und der Bördelkante 19 in einem rechten Winkel zu diesen.

Der Rand 3a mit dem Scharnier 8a bzw. dem Knickbereich 23a ist aus einem Blechstreifen durch Biegen herstellbar.

Im Folgenden wird die Funktionsweise der erfindungsgemäßen Springform 1a erläutert. Wenn sich der Verschluss 13a in seiner Schließstellung befindet und der Rand 3a bestimmungsgemäß mit dem Boden 2a in Verbindung steht, liegt ein unterer Fußbereich 33 des Rands 3a seitlich außen an der Seitenwand 27 an. Der Fußbereich 33 wird dabei von außen gegen die Seitenwand 27 dicht gedrückt und umläuft diese. Der Boden 2a und der Rand 3a sind fest klemmend und dicht miteinander verbunden. Der Mittelpunktswinkel des Rands 3a schließt einen Windel von 90° ein. Die Bördelkante 19 liegt ferner auf dem Rinnenboden 28 auf. Sie ist beabstandet zu dem Begrenzungssteg 29 angeordnet. Die Aufnahmerinne 31 dient somit zur Aufnahme der Bördelkante 19 bzw. der Seitenwand 27.

Beim Öffnen des Verschlusses 13a vergrößert sich der Mittelpunktswinkel des Rands 3a durch eine Schwenkbewegung der Randabschnitte 7, 9 um die Scharnierachse 25 zueinander. Es ist dabei von Vorteil, wenn der integrale Knickbereich 23a eine Federeigenschaft aufweist, die das Öffnen des Verschlusses 13a und das Aufweiten des Rands 3a unterstützt. Der Boden 2a und der Rand 3a können dann leicht voneinander getrennt werden. Das Schließen des Verschlusses 13a erfolgt gegen eine Feder-Vorspannung des integralen Knickbereichs 23a.

Die Aufnahmerinne 31 dient außerdem zur Aufnahme von Teig, der über den Rand 3a gelaufen ist. Sie bildet somit auch einen Überlaufschutz.

Der Rand 3a ist durch seine einstückige Ausgestaltung äußerst einfach und kostengünstig herstellbar. Ein aufwändiger Zusammenbau desselben ist nicht erforderlich. Außerdem treten keine Dichtheitsprobleme bei dem Knickbereich 23a wegen dessen integralen Ausbildung in dem Rand 3a auf.

## Patentansprüche

1. Springform (1a) zum Backen von Backwaren, insbesondere von Kuchen, wobei die Springform (1a) umfasst
a. einen Boden (2a),
b. einen mit dem Boden (2a) verbindbaren Rand (3a) mit
i. einem ersten Randabschnitt (7),
ii. einem zweiten Randabschnitt (9) und
iii. einem dritten Randabschnitt (10), und
c. einen an dem dritten Randabschnitt (10) vorgesehenen Verschluss (13a) zum Öffnen und Schließen der Springform (1a),
wobei
d. der erste Randabschnitt (7) und der zweite Randabschnitt (9) schwenkbar miteinander verbunden sind,
e. der Rand (3a) eine kreissektorförmige Kontur mit einem Mittelpunkt (M), insbesondere mit einem Mittelpunktswinkel von 90° in einer Schließstellung der Springform (1; 1a), aufweist,
f. der Boden (2a) kreissektorformig mit einem Mittelpunkt (M), insbesondere mit einem Mittelpunktswinkel von 90° in einer Schließstellung der Springform (1a), ausgeführt ist, wobei
g. ein Scharnier (8a) zur schwenkbaren Verbindung des ersten Randabschnitts (7) und des zweiten Randabschnitts (9), vorgesehen ist,
**dadurch gekennzeichnet, dass**
h. der Boden (2a) derart mit dem Rand (3a) verbunden ist, dass das Scharnier (8a) an dem Mittelpunkt (M) angeordnet ist, wobei
i. das Scharnier (8a) durch einen Knickbereich (23a) gebildet ist, wobei
j. der erste Randabschnitt (7) und der zweite Randabschnitt (9) einteilig ausgebildet sind und über den einteiligen Knickbereich (23a), in Art eines Filmscharniers, miteinander verbunden sind, wobei der erste Randabschnitt (7) und der zweite Randabschnitt (9) über den einteiligen Knickbereich (23a) zueinander verschwenkbar sind.

2. Springform nach Anspruch 1, **dadurch gekennzeichnet, dass** der erste Randabschnitt (7) und der zweite Randabschnitt (9) eben ausgeführt sind.

3. Springform gemäß einem der vorstehenden Ansprüche, **dadurch gekennzeichnet, dass** der dritte Randabschnitt (10) konvex geformt ist.

4. Springform gemäß einem der vorstehenden Ansprüche, **dadurch gekennzeichnet, dass** der dritte Randabschnitt (10) zweiteilig mit einem äußeren Teil (11) und einem inneren Teil (12) ausgeführt ist.

5. Springform gemäß Anspruch 4, **dadurch gekennzeichnet, dass** der äußere Teil (11) gegenüber dem inneren Teil (12) verschiebbar ist.

6. Springform gemäß einem der Ansprüche 4 oder 5, **dadurch gekennzeichnet, dass** der äußere Teil (11) einstückig mit dem ersten Randabschnitt (7) und der innere Teil (12) einstückig mit dem zweiten Randabschnitt (9) ausgeführt sind.

7. Springform gemäß einem der vorstehenden Ansprüche, **dadurch gekennzeichnet, dass** der Boden (2a) an dem Rand (3a) klemmend befestigbar ist.

8. Springform gemäß einem der vorherigen Ansprüche, **dadurch gekennzeichnet, dass** der Boden (2a) eine Seitenwand (27) aufweist, mit der der Rand (3a) verbindbar ist, wobei vorzugsweise der Boden (2a) ferner eine Aufnahmerinne (31) hat, die durch die Seitenwand (27) nach innen begrenzt ist.

9. Springform gemäß einem der vorherigen Ansprüche, **dadurch gekennzeichnet, dass** der integrale Knickbereich (23a) federartig ist, wobei dieser vorzugsweise derart ausgebildet ist, dass ein Schließen des Verschlusses (13a) gegen eine Feder-Vorspannung des integralen Knickbereichs (23a) erfolgt.

## Claims

1. Springform pan (1a) for baking pastries, in particular cake, with the springform pan (1a) comprising
a. a bottom (2a),
b. a rim (3a) which is connectable to the bottom (2a), the rim (3a) comprising
i. a first rim portion (7),
ii. a second rim portion (9), and
iii. a third rim portion (10), and
c. a closure (13a) which is provided at the third rim portion (10) for opening and closing the springform pan (1a),
wherein
d. the first rim portion (7) and the second rim portion (9) are pivotably connected to each other,
e. that the rim (3a) has a contour in the shape of a segment of a circle having a center (M), in particular a central angle of 90°, when the springform pan (1; 1a) is in a closed position,
f. the bottom (2a) is in the shape of a segment of a circle with a center (M), in particular a central angle of 90°, when the springform pan (1a) is in a closed position,
g. a hinge (8; 8a) for pivotably connecting the first rim portion (7) to the second rim portion (9) isprovided,
**characterized in that**
h. the bottom (2a) is connected with the rim (3a) in such a way that the hinge (8a) is arranged at the center (M),
i. the hinge (8a) is formed by a bending region (23a)
wherein
j. the first rim portion (7) and the second rim portion (9) are formed in one piece with each other and are connected via the one-piece bending region (23a), in the manner of an integral hinge, with the first rim portion (7) and the second rim portion (9) being pivotable relative to each other via the one-piece bending region (23a).

2. Springform pan according to claim 1, **characterized in that** the first rim portion (7) and the second rim portion (9) are plane.

3. Springform pan according to one of the preceding claims, **characterized in that** the third rim portion (10) is convex.

4. Springform pan according to one of the preceding claims, **characterized in that** the third rim portion (10) has a two-part design comprising an outer part (11) and an inner part (12).

5. Springform pan according to claim 4, **characterized in that** the outer part (11) is displaceable relative to the inner part (12).

6. Springform pan according to one of claims 4 or 5, **characterized in that** the outer part (11) is formed in one piece with the first rim portion (7) while the inner part (12) is formed in one piece with the second rim portion (9).

7. Springform pan according to one of the preceding claims, **characterized in that** the bottom (2a) is fixable to the rim (3a) by clamping.

8. Springform pan according to one of the preceding claims, **characterized in that** the bottom (2a) comprises a side wall (27) to which the rim (3a) is connectable, with the bottom (2a) furthermore preferably having a receiving trough (31) which is inwardly bounded by the side wall (27).

9. Springform pan according to one of the preceding claims, **characterized in that** the integral bending region (23a) is spring-like, with the bending region (23a) preferably being formed in such a way that the closure (13a) is closed against a spring bias of the integral bending region (23a).

## Revendications

1. Moule à fond amovible (1a) pour la cuisson de produits de boulangerie, en particulier de gâteaux, le moule à fond amovible (1a) comprenant
a. un fond (2a)
b. un bord (3a) pouvant être relié au fond (2a) pourvu
i. d'une première section de bord (7),
ii. d'une deuxième section de bord (9) et
iii. d'une troisième section de bord (10), et
c. un dispositif de fermeture (13a) disposé sur la troisième section de bord (10) et servant à ouvrir et à fermer le moule à fond amovible (1a),
d. la première section de bord (7) et la deuxième section de bord (9) étant reliées l'une à l'autre de manière pivotante,
e. le bord (3a) présentant un contour en forme de secteur de cercle pourvu d'un centre (M), en particulier d'un angle au centre de 90° dans une position de fermeture du moule à fond amovible (1 ; 1a),
f. le fond (2a) étant en forme de secteur de cercle pourvu d'un centre (M), en particulier d'un angle au centre de 90° dans une position de fermeture du moule à fond amovible (1a),
g. une charnière (8a) permettant une liaison pivotante entre la première section de bord (7) et la deuxième section de bord (9),
**caractérisé en ce que**
h. le fond (2a) est relié au bord (3a) de telle manière que la charnière (8a) est disposée au centre (M),
i. la charnière (8a) étant formée par une zone de pliure (23a),
j. la première section de bord (7) et la deuxième section de bord (9) étant réalisées d'une seule pièce et étant reliées l'une à l'autre au moyen de la zone de pliure intégrale (23a), à la façon d'un film-charnière, la première section de bord (7) et la deuxième section de bord (9) pouvant pivoter l'une par rapport à l'autre par l'intermédiaire de la zone de pliure intégrale (23a).

2. Moule à fond amovible selon la revendication 1, **caractérisé en ce que** la première section de bord (7) et la deuxième section de bord (9) sont plates.

3. Moule à fond amovible selon l'une quelconque des revendications précédentes, **caractérisé en ce que** la troisième section de bord (10) est de forme convexe.

4. Moule à fond amovible selon l'une quelconque des revendications précédentes, **caractérisé en ce que** la troisième section de bord (10) comprend deux parties, une partie extérieure (11) et une partie intérieure (12).

5. Moule à fond amovible selon la revendication 4, **caractérisé en ce que** la partie extérieure (11) est mobile par rapport à la partie intérieure (12).

6. Moule à fond amovible selon l'une quelconque des revendications 4 ou 5, **caractérisé en ce que** la partie extérieure (11) est réalisée d'une seule pièce avec la première section de bord (7) et la partie intérieure (12) est reliée d'une seule pièce à la deuxième section de bord (9).

7. Moule à fond amovible selon l'une quelconque des revendications précédentes, **caractérisé en ce que** le fond (2a) peut être fixé sur le bord (3a) par serrage.

8. Moule à fond amovible selon l'une quelconque des revendications précédentes, **caractérisé en ce que** le fond (2a) comprend une paroi latérale (27) à laquelle le bord (3a) peut être relié, le fond (2a) présentant en outre de préférence une rainure de logement (31), qui est délimitée vers l'intérieur par la paroi latérale (27).

9. Moule à fond amovible selon l'une quelconque des revendications précédentes, **caractérisé en ce que** la zone de pliure intégrale (23a) est du type à ressort, cette zone étant réalisée de préférence de telle manière qu'une fermeture du dispositif de fermeture (13a) s'effectue à l'encontre d'une précontrainte du ressort de la zone de pliure intégrale (23a).
